# EUROPEAN PATENT APPLICATION

(11) **EP 4 641 766 A1**
(43) Date of publication of application: **29.10.2025**
(21) Application number: 24773891.7
(22) Date of filing: 01.03.2024
(51) Int. Cl.: H01M 10/615, H01M 10/625, H01M 10/6571, H01M 10/6554, H01M 10/635, H01M 50/244, H01M 50/249, H01M 50/298, H01M 10/48

(54) **HEATING PLATE, BATTERY PACK, AND VEHICLE**

(30) Priority: 17.03.2023 CN 202320613069 U
(71) Applicant: BYD Company Limited, Shenzhen, Guangdong 518118 (CN)
(72) Inventor: TAN, Liangwen, Shenzhen, Guangdong 518118 (CN); WANG, Jun, Shenzhen, Guangdong 518118 (CN); SU, Hongchao, Shenzhen, Guangdong 518118 (CN); WANG, Chaogong, Shenzhen, Guangdong 518118 (CN); WANG, Yanzhao, Shenzhen, Guangdong 518118 (CN)
(74) Representative: Wu, Ting
(86) International application number: PCT/CN2024/079484
(87) International publication number: WO 2024/193323

(57) **Abstract**

A vehicle, comprising a heating plate and a battery pack. The heating plate comprises: a composite plate, an interlayer being formed inside the composite plate; a heating component at least partially embedded in the interlayer; and a temperature collecting component used for collecting the temperature of batteries in a battery pack, the temperature collecting component being at least partially embedded in the interlayer and arranged to avoid the heating component.

## Description

The present application claims the benefit of priority to Chinese Patent Application No. 202320613069.6 filed on March 17, 2023, titled "HEATING PLATE, BATTERY PACK, AND VEHICLE", which is incorporated herein in its entirety.

### TECHNICAL FIELD

The present application relates to the technical field of power batteries, specifically to a heating plate, a battery pack and a vehicle.

### BACKGROUND

At present, after the vehicles are parked in northern winter or low temperature environments for a period of time, the temperature of the battery pack may drop below zero degrees. When the driver starts the vehicle, the battery pack needs to quickly heat up to raise the temperature of the battery pack to a suitable operating temperature. Therefore, related art provides a heating plate for balanced heating the battery pack. In order to detect the temperature of the battery pack, a temperature collecting component is usually set up to collect the temperature of the battery. For example, the temperature collecting component can be an NTC (Negative Temperature Coefficient) temperature sensor.

However, in related art, NTC temperature sensor is often set on the surface of the battery and connected to the battery through a wire harness, which requires an additional portion of the space volume of the battery pack, which is not conducive to space saving and structural optimization of the battery pack.

### SUMMARY

An object of the present application is to provide a new technical solution for a heating plate for a battery pack.

According to a first aspect of the present application, a heating plate for a battery pack is provided in an embodiment of the present application, and the heating plate includes:
a composite plate, and an interlayer is formed inside the composite plate;
a heating component, and the heating component is at least partially embedded in the interlayer;
a temperature collecting component, configured to collect a temperature of batteries inside the battery pack, and the temperature collecting component is at least partially embedded in the interlayer and arranged to avoid the heating component.

Optionally, the heating component includes a heating wire and a heating wire joint, the heating wire is embedded in the interlayer and is arranged in a snake shape, and the heating wire joint is connected to the heating wire and is located at an end of the heating plate.

Optionally, the heating wire is arranged to form a plurality of heating arrays arranged at intervals, and each of the heating arrays is configured to heat a plurality of batteries.

Optionally, the composite plate includes a first plate and a second plate, the first plate and the second plate are fixedly connected, and the interlayer is formed between the first plate and the second plate.

Optionally, the interlayer includes a first avoiding space, and the heating component is not embedded in the first avoiding space. The temperature collecting component includes a temperature collecting wire joint, a temperature collecting wire harness and a temperature sensor. The temperature collecting wire joint, the temperature collecting wire harness, and the temperature sensor are connected in sequence. The temperature collecting wire harness is located in the first avoiding space, and the temperature collecting wire joint is at least partially embedded in the composite plate.

Optionally, a through hole is arranged on the heating plate, and the temperature sensor is located in the through hole and is connected to the battery for collecting the temperature of the battery.

Optionally, the interlayer includes a second avoiding space, and the heating component is not embedded in the second avoiding space. A fixing hole is arranged on the composite plate, and the fixing hole is connected to the second avoiding space for fasteners to pass through to fix the heating plate to the tray frame of the battery pack.

Optionally, a plurality of reinforcing strips are arranged side by side and at intervals on an upper surface of the composite plate. Extension direction of the reinforcing strips is perpendicular to extension direction of the batteries inside the battery pack.

According to a second aspect of the present application, a battery pack is provided in an embodiment of the present application, and the battery pack includes a battery assembly, a tray, and the heating plate according to any one of the first aspects. The tray is configured to accommodate the battery assembly, and the heating plate is located above the battery assembly and fixedly connected to the tray.

According to a third aspect of the present application, a vehicle is provided in an embodiment of the present application, and the vehicle includes the battery pack according to the second aspect.

The present application adopts a composite heating plate, the heating plate includes an interlayer formed by upper and lower composite plates. A heating wire and a temperature collecting wire are embedded in the interlayer, and the heating wire and the temperature collecting wire are arranged to avoid each other, so that the integrated setting of the heating plate and the temperature collecting component is realized, the temperature collecting component is prevented from being exposed on the outer surface, the additional portion of the space volume of the battery pack is not occupied, and the space saving and the structural optimization of the battery pack are realized.

Through the detailed description of the exemplary embodiments of this specification with reference to the accompanying drawings, other features and advantages of the specification will become clear.

### BRIEF DESCRIPTION OF THE DRAWINGS

The accompanying drawings, which are incorporated in and constitute a part of the specification, illustrate embodiments of the specification and, together with the description thereof, serve to explain the principles of the specification.
FIG. 1 is a schematic diagram of a battery pack in an embodiment of the present application.
FIG. 2 is a top view of an internal structure of a battery pack in an embodiment of the present application.
FIG. 3 is a schematic diagram of a heating plate in an embodiment of the present application.
FIG. 4 is an exploded view of a heating plate in an embodiment of the present application.
FIG. 5 is a partial schematic diagram of the internal structure of the heating plate in an embodiment of the present application.
FIG. 6 is a schematic diagram of a specific structure of a temperature collecting component in an embodiment of the present application.
FIG. 7 is a schematic diagram of the arrangement of a heating component and a temperature collecting component in an embodiment of the present application.
FIG. 8 is a partially enlarged schematic diagram of the internal structure of the heating component in an embodiment of the present application.
FIG. 9 is a schematic diagram of a vehicle in an embodiment of the present application.

### Description of Reference Signs

1000. Vehicle; 1. Battery pack; 10. Heating plate; 11. First plate; 12. Second plate; 13. Heating component; 14. Temperature collecting component; 15. Reinforcing strip; 16. Fixing hole; 17. Through hole; 20. Tray; 21. Tray frame; 22. Mounting hole; 30. Battery assembly; 100. Interlayer; 101. First avoiding space; 102. Second avoiding space; 102a. Second cross beam avoiding space; 102b. Second longitudinal beam avoiding space; 110. First plate fixing hole; 120. Second plate fixing hole; 130. Heating wire; 130a. Starting end of heating wire; 130b. Ending end of heating wire; 131. Heating wire joint; 140. Temperature sensor; 141. Temperature collecting wire harness; 142. Temperature collecting wire joint; 150. Reinforcing strip fixing hole; 210. Edge beam; 211. Cross beam; 212. Longitudinal beam; 301. First battery assembly; 302. Second battery assembly; 303. Third battery assembly; 304. Fourth battery assembly; 1301. First heating area; 1302. Second heating area; 1303. Third heating area; 1304. Fourth heating area.

### DETAILED DESCRIPTION

The embodiments of the present application will be described in detail below, and examples of the embodiments are shown in the accompanying drawings, where the same or similar reference signs throughout represent the same or similar elements or elements with the same or similar functions. The embodiments described below with reference to the accompanying drawings are exemplary and are only configured to explain the present application, and should not be understood as limiting the present application. According to the embodiments in the present application, all other embodiments obtained by a person skilled in the art without creative labor are within the scope of protection of the present application.

The terms "first" and "second" in the specification and claims of the present application may explicitly or implicitly include one or more of these features. In the description of the present application, unless otherwise specified, the meaning of "a plurality of" refers to two or more.

In the description of the present application, it should be understood that the terms "center", "length", "width", "thickness", "upper", "lower", "front", "back", "left", "right", "vertical", "horizontal", "top", "bottom", "inside", "outside", "clockwise", "counterclockwise", "circumferential", "axial" and other directional or positional relationships indicated are according to the directional or positional relationships shown in the accompanying drawings, only for the convenience of describing this application and simplifying the description, and do not indicate or imply that the device or component referred to must have a specific orientation, be constructed and operated in a specific orientation, therefore cannot be understood as a limitation on the present application.

In the description of the present application, it should be noted that unless otherwise specified and limited, the terms "installation" and "connection" should be broadly understood, for example, they can be fixed connection, detachable connection, or integrated connection; it can be a mechanical connection or an electrical connection; it can be directly connected, indirectly connected through an intermediate medium, or connected internally between two components. For a person skilled in the art, the specific meanings of the above terms in the present application can be understood in specific situations.

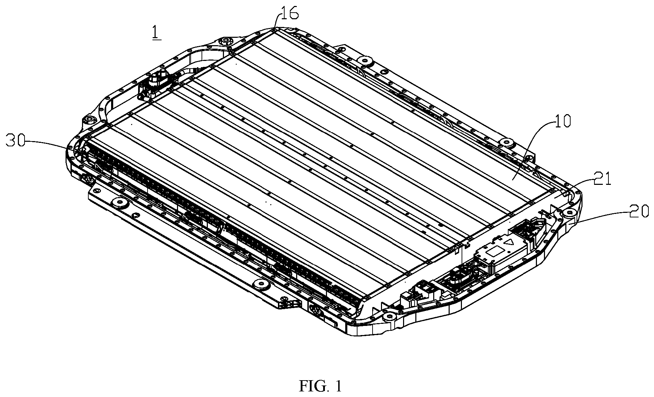

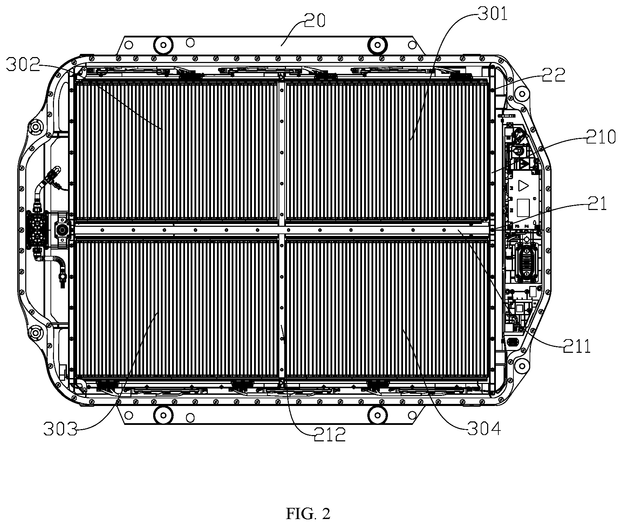

According to an embodiment of the present application, a battery pack 1 is provided, and the battery pack includes a heating plate 10, a tray 20, and a battery assembly 30. The tray 20 is configured to accommodate and carry the battery assembly 30, and the heating plate 10 is located above the battery assembly 30 and fixedly connected to the tray 20 through fasteners (not shown). As shown in FIG. 1 and FIG. 2, FIG. 1 is a schematic diagram of the battery pack 1 of the present application, and FIG. 2 is a top view of the internal structure of the battery pack of the present application. In the embodiment, the tray 20 includes a tray frame 21, and the area of the entire battery pack 1 accommodating the battery assembly 30 is divided into four areas by the tray frame, i.e. a first battery assembly 301, a second battery assembly 302, a third battery assembly 303, and a fourth battery assembly 304. The tray frame 21 includes edge beams 210 located at the front and rear ends of the battery pack 1, a cross beam 211 located in the middle of the battery pack 1, and a longitudinal beam 212 arranged perpendicular to the cross beam 211. The extension direction of the battery body is parallel to the width direction of the battery pack 1, and the arrangement direction of the batteries is parallel to the length direction of the battery pack 1. A plurality of mounting holes 22 are arranged on the tray frame 21, and the mounting holes are distributed on the edge beams 210, the cross beam 211, and the longitudinal beam 212, respectively. A plurality of fixing holes 16 are also arranged on the heating plate 10, and the fixing holes 16 are located on positions of the heating plate corresponding to the vertical projected positions of the edge beams 210, the cross beam 211, and the longitudinal beam 212, respectively, that is, the fixing holes 16 and the mounting holes 22 are bolted through fasteners (not shown) to fix the heating plate 10 to the tray frame 21 of the battery pack 1.

According to an embodiment of the present application, a heating plate 10 for a battery pack 1 is also provided. The heating plate 10 is located above a battery assembly 30 in the battery pack 1 and is fixedly connected to a tray 20 for heating the battery assembly 30 in the tray 20. The following will introduce the heating plate 10.

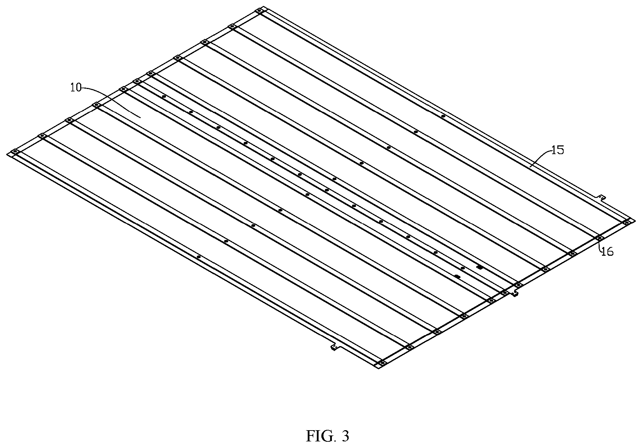

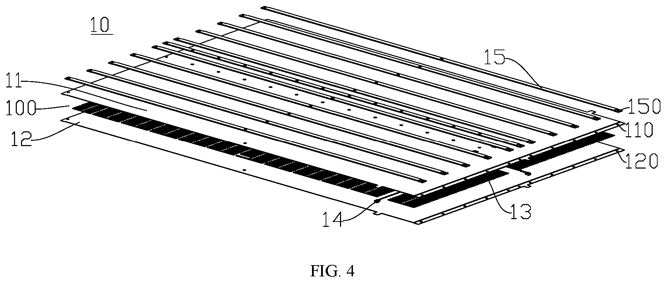

As shown in FIG. 3 and FIG. 4, FIG. 3 is a schematic diagram of the heating plate 10 of the present application, and FIG. 4 is an exploded view of the heating plate 10 of the present application. The heating plate 10 includes a first plate 11, a second plate 12, a heating component 13, a temperature collecting component 14, and a reinforcing strip 15. The first plate 11 and the second plate 12 are fixedly connected to form a composite plate, and an interlayer 100 is formed between the first plate 11 and the second plate 12.

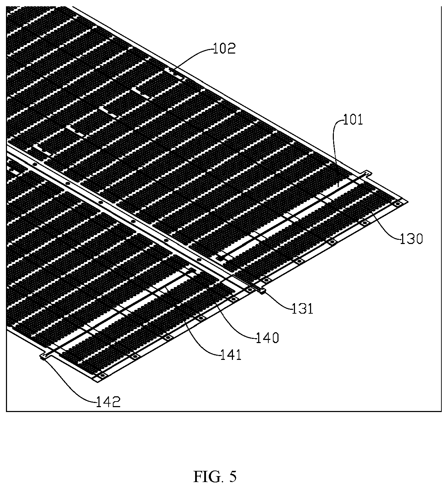

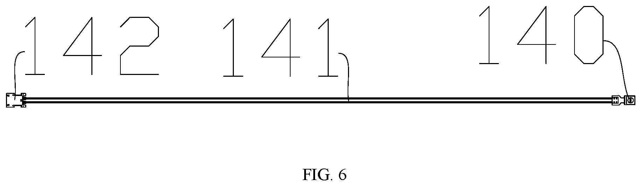

Specifically, the heating plate 10 of the present application is a non-metallic composite material plate, and the interlayer 100 is formed inside the composite plate. The composite material is commonly PCM plate (resin+glass fiber) or PP glass fiber plate. In an embodiment, the heating plate 10 is composed of an upper composite plate and a lower composite plate, which are a first plate 11 and a second plate 12, respectively. The heating component 13 and the temperature collecting component 14 are at least partially embedded in the interlayer 100 formed between the two. Optionally, the heating plate 10 can be an epoxy plate. As shown in FIG. 5, FIG. 5 is a partial schematic diagram of the internal structure of the heating plate 10 of the present application. The heating component 13 includes a heating wire 130 and a heating wire joint 131. The heating wire 131 is embedded in the interlayer 100 formed between the first plate 11 and the second plate 12. The heating wire 130 is arranged in a snake shape in the interlayer 100. The heating wire joint 131 is connected to the heating wire 130 and is located at the end of the heating plate 10. As shown in FIG. 6, FIG. 6 is a schematic diagram of a specific structure of a temperature collecting component 14 of the present application. The temperature collecting component 14 is configured to collect the temperature inside the battery pack 1, and includes a temperature sensor 140, a temperature collecting wire harness 141, and a temperature collecting wire joint 142. The temperature collecting wire joint 142, the temperature collecting wire harness 141, and the temperature sensor 140 are connected in sequence. The temperature collecting wire harness 141 is embedded in the interlayer 100 formed between the first plate 11 and the second plate 12, and the temperature collecting wire joint 142 is at least partially embedded in the heating plate 10. By integrated arrangement of the temperature collecting component 14, the protective properties of the temperature collecting component 14, i.e. NTC, are ensured, the temperature collecting component 14 is prevented from being exposed on the outer surface, and the temperature collecting component 14 can be prevented from being damaged due to collision with the surrounding wall or other components during the movement or use of the battery pack 1. At the same time, since the temperature collecting component 14 is integrated into the heating plate 10, the space occupied by the temperature collecting component 14 in the battery pack 1 is greatly reduced, and there is no need to additionally occupy a portion of the space volume of the battery pack 1, which can be beneficial to the space saving and structure optimization of the battery pack 1, and provides a greater design space and a more reasonable component arrangement design for the battery pack 1.

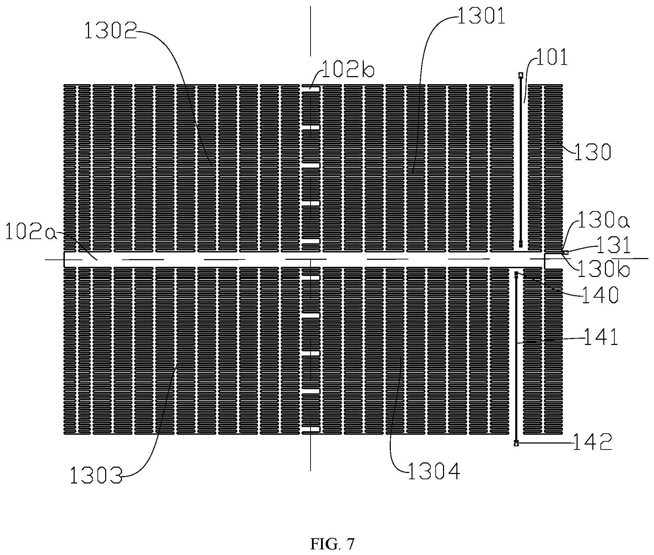

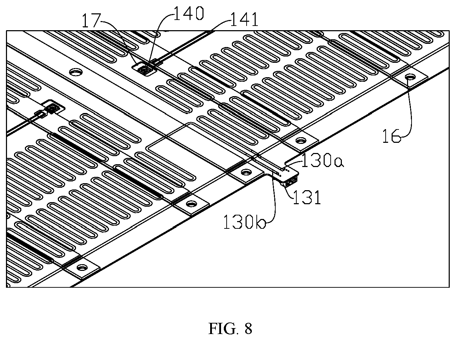

According to some embodiments of the present application, the arrangement of the heating wire 130 located in the interlayer 100 is arranged in a snake shape, the heating wire 130 arranged in the snake shape can be controlled by controlling the width, spacing, and number of turns of the heating wire, thereby controlling the heating power density of the heating wire 130. Heating wires 130 with different powers can be arranged specifically for batteries in different areas, greatly reducing the temperature difference of each of the batteries under the active insulation and heating conditions. As shown in FIG. 7, FIG. 7 is a schematic diagram of the arrangement of a heating component 13 and a temperature collecting component 14 of the present application. In the present application, the heating wire 130 is arranged to form a plurality of heating arrays arranged at intervals, each of the heating arrays covers a plurality of battery surfaces of the battery pack 1 to heat a plurality of batteries. Specifically, in an embodiment, each of the heating arrays covers four battery surfaces, and the width of each of the heating arrays can also be changed according to design requirements to cover more or fewer battery surfaces. As shown in FIG. 8, FIG. 8 is a partially enlarged schematic diagram of the internal structure of the heating component 10 of the present application. Referring to FIG. 7 and FIG. 8, the starting end 130a of the heating wire 130 is led out from the heating wire joint 131 located at one end of the heating plate 10, gradually extending and bending to form the heating arrays arranged at intervals, the heating arrays are connected end-to-end, and finally the ending end 130b of the heating wire returns to the heating wire joint 131 and is connected thereto. Due to the fact that the batteries inside the battery pack 1 in the embodiment are generally divided into four areas by the tray frame 21, the heating arrays formed by the arrangement of the heating wire 130 are also generally divided into four areas corresponding to the batteries. Specifically, the starting end 130a of the heating wire 130 is led out from the heating wire joint 131 and is bent and extended to form a first heating area 1301, a second heating area 1302, a third heating area 1303, and a fourth heating area 1304. The first heating area 1301, the second heating area 1302, the third heating area 1303, and the fourth heating area 1304 are connected in sequence, and the first heating area 1301 and the second heating area 1302 are located on one side of the cross beam 211 in the length direction of the battery pack 1, and the third heating area 1303 and the fourth heating area 1304 are located on the other side of the cross beam 211. The first heating area 1301 corresponds to the first battery assembly 301, the second heating area 1302 corresponds to the second battery assembly 302, the third heating area 1303 corresponds to the third battery assembly 303, and the fourth heating area 1304 corresponds to the fourth battery assembly 304. An avoiding space is formed between the heating areas on both sides, which corresponds to the cross beam 211 of the tray frame 21.

According to some embodiments of the present application, it is preferred that the interlayer 100 inside the heating plate 10 includes a first avoiding space 101 and a second avoiding space 102, the heating wire 130 is not arranged at the first avoiding space 101 and the second avoiding space 102, that is, the heating wire 130 avoids these spaces in the interlayer 100 during the bending and extending process. The first avoiding space 101 is located in the first heating area 1301 and the fourth heating area 1304. In the embodiment, the number of the first avoiding spaces 101 is two and the first avoiding spaces 101 are arranged generally symmetrically about the cross beam 211 of the battery pack 1, the first avoiding space 101 is extended in the extension direction of the battery, the heating wire 130 connecting adjacent heating arrays is arranged on the side of the first avoiding space 101 close to the cross beam 211, and the side away from the cross beam 211 is an opening. The temperature collecting component 14 is at least partially located in the first avoiding space 101. Specifically, the upper and lower temperature sensors 140 are connected by positive and negative temperature collecting wire harnesses 141 (power supply lines) respectively, a through hole 17 is arranged on the heating plate 10 close to the cross beam 211, that is, the through hole 17 is arranged on the first plate 11 and the second plate 12 on the side of the first avoiding space 101 close to the cross beam 211, and the through hole 17 is a penetrating hole. The temperature sensor 140 is located in the through hole 17 and is connected to the battery of the battery pack 1 for collecting the temperature of the battery, specifically, the temperature sensor 140 is attached to the top surface of the battery for collecting the temperature, and the temperature collecting wire harness 141 is extended all the way to both sides of the width of the heating plate 10 and is led out through the temperature collecting wire joint 142. A protruding portion is arranged at the position of the heating plate 10 corresponding to the temperature collecting wire joint 142 for covering the temperature collecting wire joint 142, and the connection portion between the temperature collecting wire joint 142 and the temperature collecting wire harness 141 is embedded in the protruding portion of the heating plate 10. In an embodiment, the second avoiding space 102 includes a second cross beam avoiding space 102a and a second longitudinal beam avoiding space 102b. The second cross beam avoiding space102a is a continuous space extending in the length direction of the battery pack 1, and its corresponding position generally corresponds to the cross beam 211 of the battery pack 1. The second longitudinal beam avoidance space 102b is an open space arranged at intervals in the width direction of the battery pack 1, and its corresponding position generally corresponds to the mounting hole 22 on the longitudinal beam 212 of the battery pack 1.

According to some embodiments of the present application, a plurality of reinforcing strips 15 are arranged side by side and at intervals on the upper surface of the heating plate 10. Referring to FIG. 4, the extension direction of the reinforcing strips 15 is perpendicular to the extension direction of the batteries inside the battery pack 1, that is, the extension direction of the reinforcing strips 15 is consistent with the length direction of the battery pack 1. In this way, the reinforcing strips 15 can cover a plurality of batteries from beginning to end, and also cover a plurality of heating arrays, providing a certain degree of stability for the heating wire 130 on the heating plate 10. The corresponding reinforcing strip fixing holes 150 are arranged on the two ends and the middle of the reinforcing strips 15 respectively. Correspondingly, the corresponding first plate fixing holes 110 and second plate fixing holes 120 are arranged on the first plate 11 and the second plate 12 respectively, that is the reinforcing strip fixing hole 150, the first plate fixing hole 110, and the second fixing hole 120 together constitute the fixing hole 16 of the heating plate 10. The fixing hole 16 located at the end is configured to fix the heating plate 10 to the edge beam 210, the fixing hole 16 located in the middle is configured to fix the longitudinal beam 212, and the fixing hole 16 located in the middle is connected to the second longitudinal beam avoiding space 102b. In addition, a row of fixing holes 16 are arranged on the position of the heating plate 10 opposite to the cross beam 211 and are arranged at intervals in the length direction of the battery pack 1, correspondingly, a row of reinforcing strip fixing holes 150 are arranged on the reinforcing strip 15 on the cross beam 211 and are arranged at intervals in the extension direction of the reinforcing strip 15, and the fixing holes 16 located at the position are connected to the second cross beam avoiding space 102a. The material of the reinforcing strip 15 is a metal material, and the strength of the heating plate 10 originally made of a non-metallic material is effectively reinforced by the setting of the reinforcing strip 15. That is, while meeting the demand for high integration of the heating plate 10, it also has the demand for lightweight and high strength characteristics. The reinforcing strip 15 is pasted above the heating plate 10, and can also be embedded between the first plate 11 and the second plate 12 of the heating plate 10 as needed, that is, located in the interlayer 100.

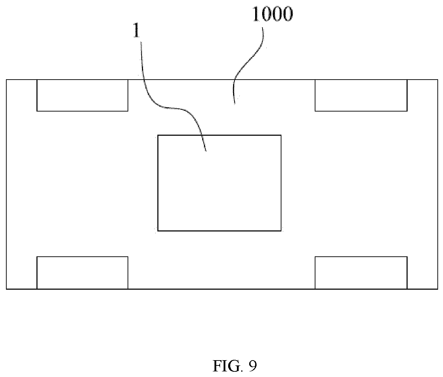

Further, referring to FIG. 9, a vehicle (1000) is provided in an embodiment of the present application, the vehicle includes the battery pack (1) in the above embodiment.

In the description of the present specification, the reference terms "one embodiment", "some embodiments", "exemplary embodiments", "examples", "specific examples", or "some examples" or the like refer to the specific features, structures, materials, or characteristics described in conjunction with the embodiments or examples included in at least one embodiment or example of the present application. In the present specification, the illustrative expressions of the above terms may not necessarily refer to the same embodiments or examples. Moreover, the specific features, structures, materials, or characteristics described can be combined in any one or more embodiments or examples in a suitable manner.

Although the embodiments of the present application have been shown and described, a person skilled in the art can understand that various changes, modifications, substitutions, and variations can be made to these embodiments without departing from the principles and purposes of the present application, and the scope of the present application is limited by the claims and their equivalents.

## Claims

1. A heating plate (10) for a battery pack (1), comprising:
a composite plate, and an interlayer (100) being formed inside the composite plate;
a heating component (13), and the heating component (13) being at least partially embedded in the interlayer (100); and
a temperature collecting component (14), configured to collect a temperature of batteries inside the battery pack (1), and the temperature collecting component (14) being at least partially embedded in the interlayer (100) and arranged to avoid the heating component (13).

2. The heating plate (10) according to claim 1, wherein the heating component (13) comprises a heating wire (130) and a heating wire joint (131), the heating wire (130) is embedded in the interlayer (100) and is arranged in a snake shape, and the heating wire joint (131) is connected to the heating wire (130) and is located at an end of the heating plate (10).

3. The heating plate (10) according to claim 2, wherein the heating wire (130) is arranged to form a plurality of heating arrays arranged at intervals, and each of the heating arrays is configured to heat a plurality of batteries.

4. The heating plate (10) according to claim 1, wherein the composite plate comprises a first plate (11) and a second plate (12), the first plate (11) and the second plate (12) are fixedly connected, and the interlayer (100) is formed between the first plate (11) and the second plate (12).

5. The heating plate (10) according to claim 1, wherein the interlayer (100) comprises a first avoiding space (101), and the heating component (13) is not embedded in the first avoiding space (101), the temperature collecting component (14) comprises a temperature collecting wire joint (142), a temperature collecting wire harness (141) and a temperature sensor (140), the temperature collecting wire joint (142), the temperature collecting wire harness (141), and the temperature sensor (140) are connected in sequence, the temperature collecting wire harness (141) is located in the first avoiding space (101), and the temperature collecting wire joint (142) is at least partially embedded in the composite plate.

6. The heating plate (10) according to claim 5, wherein a through hole (17) is arranged on the heating plate (10), and the temperature sensor (140) is located in the through hole (17) and is connected to the battery for collecting the temperature of the battery.

7. The heating plate (10) according to claim 1, wherein the interlayer (100) comprises a second avoiding space (102), and the heating component (13) is not embedded in the second avoiding space (102), a fixing hole (16) is arranged on the composite plate, and the fixing hole (16) is connected to the second avoiding space (102) for fasteners to pass through to fix the heating plate (10) to the tray frame (21) of the battery pack (1).

8. The heating plate (10) according to claim 1, wherein a plurality of reinforcing strips (15) are arranged side by side and at intervals on an upper surface of the composite plate, and extension direction of the reinforcing strips (15) is perpendicular to extension direction of the batteries inside the battery pack (1).

9. A battery pack (1), comprising a battery assembly (30), a tray (20), and the heating plate (10) according to any one of claims 1 to 8, the tray (20) being configured to accommodate the battery assembly (30), and the heating plate (10) being located above the battery assembly (30) and fixedly connected to the tray (20).

10. A vehicle (100), comprising the battery pack (1) according to claim 9.
